# EUROPEAN PATENT APPLICATION

(11) **EP 4 641 979 A1**
(43) Date of publication of application: **29.10.2025**
(21) Application number: 25172947.1
(22) Date of filing: 28.04.2025
(51) Int. Cl.: H04L 9/40, G06F 21/31, G06F 21/32

(54) **METHODS, APPARATUSES, STORAGE MEDIUMS, AND ELECTRONIC DEVICES FOR THREE-PARTY IDENTITY VERIFICATION**

(30) Priority: 28.04.2024 CN 202410528800
(71) Applicant: Alipay (Hangzhou) Information Technology Co., Ltd., Hangzhou, Zhejiang 310000 (CN)
(72) Inventor: SHI, Shangcheng, Hangzhou Zhejiang, 310000 (CN)
(74) Representative: Fish & Richardson P.C.

(57) **Abstract**

Embodiments of this specification disclose methods, apparatuses, storage mediums, and electronic devices for three-party identity verification. First, a user device obtains a first identity verification request initiated by a first application and sends the first identity verification request to an associated second application, and then performs an identity recognition operation on a user based on the first identity verification request by using the second application. Then, a second network device corresponding to the second application obtains an identity recognition result of the user and a corresponding temporary credential in response to the identity recognition operation, and returns the temporary credential to the user device. Then, the user device generates a corresponding identity verification request based on the received temporary credential and sends the identity verification request to a first network device corresponding to the first application. Then, the first network device generates a second identity verification request about the user based on identity information of the user and the temporary credential and sends the second identity verification request to the second network device, to complete three-party identity verification.

## Description

### TECHNICAL FIELD

This application relates to the field of computer technologies, and in particular, to methods, apparatuses, storage mediums, and electronic devices for three-party identity verification.

### BACKGROUND

As the times develop, large mobile applications (vendor apps for short) provide merchant applications (merchant apps for short) with more abundant three-party services, including identity verification services (for example, a face identity verification service). The identity verification services mainly aim to help merchant apps verify real identities of terminal users of the merchant apps by using identity verification protocols output by vendor apps. Given the complexity of related network protocols, developers of merchant apps may erroneously integrate identity verification services provided by vendor apps, resulting in security risks. In some cases, attackers may forge protocol communications to bypass identity verification, and ultimately damage rights and interests of users in merchant apps.

### SUMMARY

This specification aims to provide methods, apparatuses, storage mediums, and electronic devices for three-party identity verification. The method provided in the embodiments of this specification can reduce the overall interaction frequency during the three-party identity verification process, simplify the interaction flow, improve interaction efficiency, and also provide a certain level of fault tolerance.

One or more embodiments of this specification provide a method for three-party identity verification, applied to a user device. The method includes the following steps: A first identity verification request initiated by a first application is obtained, and the first identity verification request is sent to a second application associated with the first application; an identity recognition operation is performed on a user based on the first identity verification request by using the second application, a temporary credential that corresponds to an identity recognition result of the user and that is returned by a second network device corresponding to the second application based on the identity recognition operation is obtained, and the temporary credential is returned to the first application; and a corresponding identity verification request is generated based on the temporary credential by using the first application, and the identity verification request is sent to a first network device corresponding to the first application, so that the first network device performs user identity verification with the second network device based on the identity verification request, where the identity verification request includes the temporary credential.

Further, in some implementations, the identity verification request further includes account login information in the first application, so that the first network device obtains identity information of the user based on the account login information.

Further, in some implementations, the temporary credential is randomly generated by the second network device, and the second network device has established an association relationship between the temporary credential and the identity recognition result of the user.

Further, in some implementations, the method further includes the following step: Verification result information about the user that is returned by the first network device based on the identity verification request is received.

One or more embodiments of this specification further provide a method for three-party identity verification, applied to a first network device. The method includes the following steps: An identity verification request sent by a user device by using a first application is received, where the identity verification request includes a temporary credential that corresponds to an identity recognition result of a user and that is from a second network device corresponding to a second application, the second application is associated with the first application, the user device performs, by using the second application, an identity recognition operation on the user based on a first identity verification request initiated by the first application, and the second network device returns the temporary credential to the user device based on the identity recognition operation; a second identity verification request about the user is generated based on the temporary credential and identity information of the user, where the second identity verification request includes the temporary credential and the identity information; the second identity verification request is sent to the second network device; and an identity comparison result about the user that is returned by the second network device based on the second identity verification request is received, where the second network device obtains the associated identity recognition result based on the temporary credential, and compares the identity recognition result with the identity information in the second identity verification request to obtain the identity comparison result.

Further, in some implementations, the identity verification request further includes account login information in the first application, and the method further includes the following step: The identity information of the user is obtained based on the account login information.

Further, in some implementations, the method further includes the following step: Verification result information corresponding to the identity verification request is determined based on the identity comparison result, and the verification result information is sent to the user device.

Further, in some implementations, the verification result information is used to indicate that identity verification fails if the identity comparison result indicates that identities are inconsistent; or the verification result information is used to indicate that identity verification succeeds if the identity comparison result indicates that identities are consistent.

One or more embodiments of this specification further provide a method for three-party identity verification, applied to a second network device. The method includes the following steps: An identity recognition result of a user and a temporary credential corresponding to the identity recognition result are obtained in response to an identity recognition operation about the user that is initiated by a second application in a user device based on a first identity verification request, and the temporary credential is returned to the user device, where the first identity verification request is initiated by a first application associated with the second application and sent to the second application, and the user device receives the temporary credential by using the second application and returns the temporary credential to the first application; a second identity verification request about the user that is sent by a first network device corresponding to the first application is received, where the second identity verification request includes identity information of the user and the temporary credential; and the associated identity recognition result is obtained based on the temporary credential, the identity recognition result is compared with the identity information in the second identity verification request, an identity comparison result about the user is obtained, and the identity comparison result is returned to the first network device.

Further, in some implementations, the obtaining an identity recognition result of a user and a temporary credential corresponding to the identity recognition result in response to an identity recognition operation about the user that is initiated by a second application in a user device based on a first identity verification request includes the following steps:
The identity recognition result of the user is obtained through recognition in response to the identity recognition operation about the user that is initiated by the second application in the user device based on the first identity verification request; and the temporary credential is randomly generated, and an association relationship between the temporary credential and the identity recognition result is established.

One or more embodiments of this specification further provide an implementation of a three-party identity verification protocol, including the following steps: A user device obtains a first identity verification request initiated by a first application, and sends the first identity verification request to a second application associated with the first application; the user device performs an identity recognition operation on a user based on the first identity verification request by using the second application; a second network device corresponding to the second application obtains an identity recognition result of the user and a temporary credential corresponding to the identity recognition result in response to the identity recognition operation, and returns the temporary credential to the user device; the user device receives, by using the second application, the temporary credential returned by the second network device, and returns the temporary credential to the first application; the user device generates a corresponding identity verification request based on the temporary credential by using the first application, and sends the identity verification request to a first network device corresponding to the first application, where the identity verification request includes the temporary credential; the first network device receives the identity verification request sent by the user device by using the first application; the first network device generates a second identity verification request about the user based on the temporary credential and identity information of the user, where the second identity verification request includes the temporary credential and the identity information; the first network device sends the second identity verification request to the second network device; the second network device receives the second identity verification request; the second network device obtains the associated identity recognition result based on the temporary credential, compares the identity recognition result with the identity information in the second identity verification request to obtain an identity comparison result about the user, and returns the identity comparison result to the first network device; and the first network device receives the identity comparison result about the user that is returned by the second network device.

One or more embodiments of this specification further provide an apparatus for three-party identity verification in a user device, including: a first request module, configured to obtain a first identity verification request initiated by a first application, and send the first identity verification request to a second application associated with the first application; an identity recognition module, configured to perform an identity recognition operation on a user based on the first identity verification request by using the second application, obtain a temporary credential that corresponds to an identity recognition result of the user and that is returned by a second network device corresponding to the second application based on the identity recognition operation, and return the temporary credential to the first application; and a second request module, configured to generate a corresponding identity verification request based on the temporary credential by using the first application, and send the identity verification request to a first network device corresponding to the first application, so that the first network device performs user identity verification with the second network device based on the identity verification request, where the identity verification request includes the temporary credential.

One or more embodiments of this specification further provide an apparatus for three-party identity verification in a first network device, including: a first receiving module, configured to receive an identity verification request sent by a user device by using a first application, where the identity verification request includes a temporary credential that corresponds to an identity recognition result of a user and that is from a second network device corresponding to a second application, the second application is associated with the first application, the user device performs, by using the second application, an identity recognition operation on the user based on a first identity verification request initiated by the first application, and the second network device returns the temporary credential to the user device based on the identity recognition operation; a generation module, configured to generate a second identity verification request about the user based on the temporary credential and identity information of the user, where the second identity verification request includes the temporary credential and the identity information; a third request module, configured to send the second identity verification request to the second network device; and a second receiving module, configured to receive an identity comparison result about the user that is returned by the second network device based on the second identity verification request, where the second network device obtains the associated identity recognition result based on the temporary credential, and compares the identity recognition result with the identity information in the second identity verification request to obtain the identity comparison result.

One or more embodiments of this specification further provide an apparatus for three-party identity verification in a second network device, including: a recognition response module, configured to obtain an identity recognition result of a user and a temporary credential corresponding to the identity recognition result in response to an identity recognition operation about the user that is initiated by a second application in a user device based on a first identity verification request, and return the temporary credential to the user device, where the first identity verification request is initiated by a first application associated with the second application and sent to the second application, and the user device receives the temporary credential by using the second application and returns the temporary credential to the first application; a third receiving module, configured to receive a second identity verification request about the user that is sent by a first network device, where the second identity verification request includes identity information of the user and the temporary credential; and an identity comparison module, configured to obtain the associated identity recognition result based on the temporary credential, compare the identity recognition result with the identity information in the second identity verification request, obtain an identity comparison result about the user, and return the identity comparison result to the first network device.

One or more embodiments of this specification further provide a storage medium, storing a computer program. The storage medium stores the computer program, and the computer program is adapted to being loaded by a processor to perform the steps of the above-mentioned methods.

One or more embodiments of this specification further provide an electronic device, including a processor and a storage. The storage stores a computer program, and the computer program is adapted to being loaded by a processor to perform the steps of the above-mentioned methods.

One or more embodiments of this specification further provide a computer program product. The computer program product stores at least one instruction, and the at least one instruction is adapted to being loaded by a processor to perform the steps of the above-mentioned methods.

One or more embodiments of this specification further provide a system for three-party identity verification. The system includes a user device, a first network device, and a second network device provided in embodiments of this specification.

In embodiments of this specification, after obtaining a first identity verification request initiated by a first application and sending the first identity verification request to an associated second application, and performing an identity recognition operation on a user by using the second application, the user device can interact with the second network device corresponding to the second application to obtain a temporary credential, and then interact with the first network device corresponding to the first application based on the temporary credential, so that the first network device interacts with the second network device based on the temporary credential and identity information of the user to complete user identity verification, in other words, complete three-party identity verification. It can reduce the overall interaction frequency, and simplify the interaction flow. In addition, because the temporary credential has no real significance, the first network device must interact with the second network device to complete user identity verification, thus providing a certain level of fault tolerance in the overall process.

### BRIEF DESCRIPTION OF DRAWINGS

Other features, objectives, and advantages of this application will become clearer by reading detailed descriptions of non-limiting embodiments made with reference to the following accompanying drawings:
FIG. 1 is a schematic flowchart illustrating a method for three-party identity verification according to one or more embodiments of this specification;
FIG. 2 is a schematic flowchart illustrating a method for three-party identity verification according to one or more embodiments of this specification;
FIG. 3 is a schematic flowchart illustrating a method for three-party identity verification according to one or more embodiments of this specification;
FIG. 4 is a schematic flowchart illustrating a method for three-party identity verification according to one or more embodiments of this specification;
FIG. 5 is a schematic flowchart illustrating an example of a method for three-party identity verification according to one or more embodiments of this specification;
FIG. 6 is a schematic diagram illustrating a structure of an apparatus for three-party identity verification according to one or more embodiments of this specification;
FIG. 7 is a schematic diagram illustrating a structure of an apparatus for three-party identity verification according to one or more embodiments of this specification;
FIG. 8 is a schematic diagram illustrating a structure of an apparatus for three-party identity verification according to one or more embodiments of this specification; and
FIG. 9 is a schematic diagram illustrating a structure of an electronic device according to one or more embodiments of this specification.

Same or similar reference numerals in the accompanying drawings represent some or similar components.

### DESCRIPTION OF EMBODIMENTS

To make the objectives, technical solutions, and advantages of this specification clearer, the following clearly and comprehensively describes the technical solutions of this specification with reference to specific embodiments of this specification and corresponding accompanying drawings. Clearly, the described embodiments are merely some but not all of embodiments of this specification. All other embodiments obtained by a person of ordinary skill in the art based on embodiments of this specification without creative efforts shall fall within the protection scope of this specification. Before discussing example embodiments in more detail, it is worthwhile to note that some example embodiments are described as processing or methods depicted as flowcharts. Although the flowchart may depict operations as sequential processing, many of the operations can be implemented in parallel, concurrently, or simultaneously. In addition, a sequence of the operations can be rearranged. The processing can be terminated when the operations of the processing are completed, but can further have additional steps not included in the accompanying drawings. The processing can correspond to a method, a function, a procedure, a subroutine, a subprogram, etc.

Identity verification services mainly aim to help merchant apps verify real identities of terminal users of the merchant apps by using identity verification protocols output by vendor apps. For example, a face identity verification protocol mainly aims to enable a merchant server to confirm that a target user has passed a face authentication service provided by a vendor. In the conventional technology, a merchant (the merchant here includes a merchant app and a merchant server) needs to perform three interactions with a vendor (the vendor includes a vendor app and a vendor server). Face identity verification is used as an example. The following provides an example of a face identity verification procedure in the conventional technology, specifically including the following steps: (1) The merchant app sends a face initialization request to the merchant server. (2) The merchant server generates a face initialization request by using identity information (such as a male/female and a name) of a user. (3) The merchant server sends the face initialization request to the vendor server. (4) The vendor server caches request data and returns a session ID to the merchant server. (5) The merchant server generates an identity verification request by using the session ID, where the identity verification request includes certify_url. (6) The merchant server returns the identity verification request to the merchant app. (7) The merchant app sends the identity verification request to the vendor app. (8) The vendor app sends certify_url to the vendor server, the user authorizes to enter the face, and the vendor server performs comparison with local cached information. (9) The vendor server returns a face identity verification result to the vendor app. (10) The vendor app returns the face identity verification result to the merchant app. (11) The merchant app sends a request to the merchant server to verify the face identity verification result. (12) The merchant server sends a message to the vendor server to query an identity verification result by using the session ID. (13) The vendor server returns the face identity verification result to the merchant server: succeed/fail. (14) The merchant server returns the face identity verification result to the merchant app (the protocol procedure ends). In the above-mentioned example, the three interactions between the merchant and the vendor are as follows: Steps (3) and (4) are the first interaction, and correspond to initialization of a face identity verification session. Steps (7) to (10) are the second interaction, and correspond to a face scanning process of a terminal user. Steps (12) and (13) are the third interaction, and the merchant server actively requests the face identity verification result from the vendor server and verifies the face identity verification result.

This application finds that, due to complexity of current protocols, some merchants may erroneously integrate identity verification protocols of vendors, for example, directly trust identity verification results returned by merchant apps, but neglect last query-back operations. Therefore, external attackers may directly forge response data of clients to complete protocol cracking, to damage rights and interests (such as account access permission and other privacy information) of users in target merchant apps. For example, with reference to the above-mentioned existing face identity verification procedure, after step (6), an attacker may directly forge a face scanning succeed response at the merchant app, so that the merchant server directly verifies the face identity verification result based on the forged response and returns the face identity verification result to the merchant app, in other words, the above-mentioned steps (7) to (10) are not actually performed. There is no doubt that there is a certain security risk. Based on this, embodiments of this specification provide a method for three-party identity verification, to provide a certain level of security fault tolerance while reducing a quantity of interactions between a merchant and a vendor, enhance security of three-party identity verification, and protect rights and interests of a user.

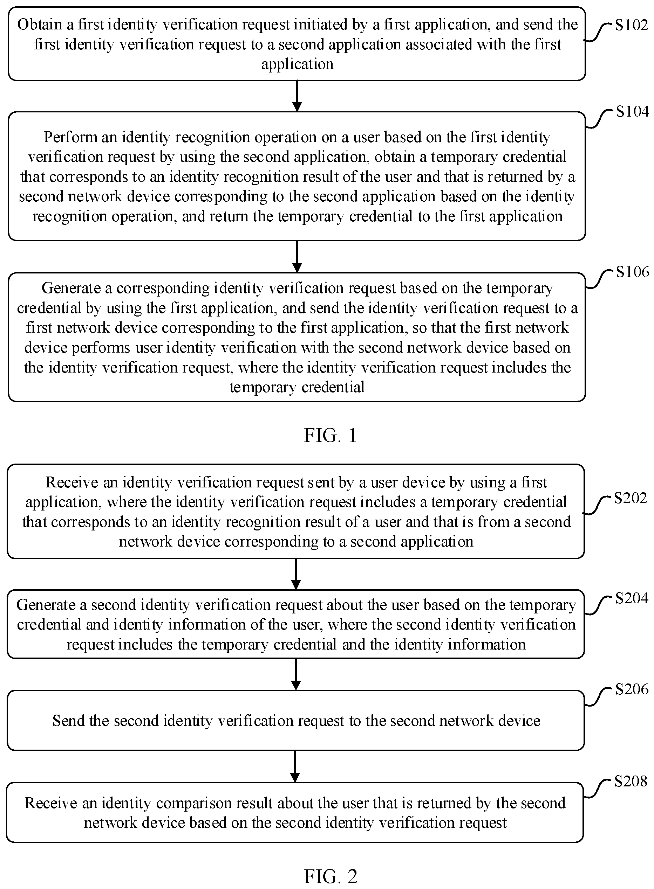

FIG. 1 is a schematic flowchart illustrating a method for three-party identity verification according to one or more embodiments of this specification. The method is applied to a first apparatus provided in one or more subsequent embodiments of this specification or an electronic device that the first apparatus is configured in. The method in the one or more embodiments is mainly performed by a user device. A first application (which may also be referred to as a "merchant app" in the context) and a second application (which may also be referred to as a "vendor app" in the context) associated with the first application are installed in the user device. A server corresponding to the first application is a first network device (which may also be referred to as a "merchant server" in the context). A server corresponding to the second application is a second network device (which may also be referred to as a "vendor server" in the context). The following describes a procedure shown in FIG. 1 in detail. A method for three-party identity verification in a user device can specifically include the following steps:
S102. Obtain a first identity verification request initiated by a first application, and send the first identity verification request to a second application associated with the first application.

In some embodiments, the first identity verification request is used to request perform identity verification on a user, and the first identity verification request does not contain any information about an identity of the user. In some embodiments, the first identity verification request includes a session ID. In some embodiments, the first identity verification request includes a face identity verification request, and the face identity verification request is used to request to perform face identity verification on the user. It is worthwhile to note that, an identity verification method is not limited in this specification. For example, iris identity verification or fingerprint identity verification can be used. It is worthwhile to note that, unlike the face identity verification procedure in the conventional technology in the above-mentioned example, in the one or more embodiments of this specification, a merchant app does not need to request certify_url from a merchant server, but directly sends the first identity verification request to a vendor app.

S104. Perform an identity recognition operation on the user based on the first identity verification request by using the second application, obtain a temporary credential that corresponds to an identity recognition result of the user and that is returned by a second network device corresponding to the second application based on the identity recognition operation, and return the temporary credential to the first application.

In some embodiments, the first identity verification request is used to request to perform face identity verification on the user, and the identity recognition operation includes a user's face scanning operation and other recognition operations (such as blinking and mouth opening) associated with the face identity verification. In some embodiments, the temporary credential is randomly generated by the second network device (for example, the temporary credential is a random string token), and after generating the temporary credential, the second network device establishes an association relationship between the temporary credential and the identity recognition result of the user, to use the temporary credential to mark the identity of the user whose face is scanned. In some embodiments, the first identity verification request includes a session ID. The second application sends information obtained based on the identity recognition operation to the second network device together with the session ID. After generating the temporary credential, the second network device establishes an association relationship between the temporary credential, the session ID, and the identity recognition result of the user. In some embodiments, after the session ID is released, the temporary credential is also released, and the association relationship between the temporary credential and the identity recognition result of the user is also released. In some embodiments, the temporary credential corresponds to effective time. If the second network device has not received a second identity verification request from a first network device before the effective time expires, the temporary credential fails, and the first application needs to initiate a new first identity verification request. It is worthwhile to note that, because the temporary credential cannot represent any information about the user, the first application cannot directly parse out identity information/the identity recognition result of the user by using the temporary credential.

As an example, after receiving the first identity verification request from the first application, the second application guides, based on the first identity verification request, the user to complete face scanning, and sends, to the second network device, face information (the information obtained based on the identity recognition operation) entered by the user, so that the second network device recognizes the identity of the user based on the face information to obtain the identity recognition result of the user, and returns the temporary credential corresponding to the identity recognition result to the second application. After receiving the temporary credential, the second application returns the temporary credential to the first application.

S106. Generate a corresponding identity verification request based on the temporary credential by using the first application, and send the identity verification request to the first network device corresponding to the first application, so that the first network device performs user identity verification with the second network device based on the identity verification request, where the identity verification request includes the temporary credential.

In some embodiments, the identity verification request further includes account login information in the first application, so that the first network device obtains the identity information of the user based on the account login information. The account login information includes information about an account that the user logs in to, and the account login information can be used to obtain the identity information (such as an identity card or a name) of the user. In some embodiments, the account login information includes a cookie.

In some embodiments, the method further includes the following step: Verification result information about the user that is returned by the first network device based on the identity verification request is received. The verification result information is used to indicate whether user identity verification succeeds.

In some embodiments, prompt information or service information returned by the first network device along with the verification result information is also received while the verification result information is received. In some embodiments, only prompt information or service information returned by the first network device based on the verification result information may be received.

FIG. 2 is a schematic flowchart illustrating a method for three-party identity verification according to one or more embodiments of this specification. The method is applied to a second apparatus provided in one or more subsequent embodiments of this specification or an electronic device that the second apparatus is configured in. The method in the one or more embodiments is mainly performed by a first network device, and the method specifically includes the following steps:
S202. Receive an identity verification request sent by a user device by using a first application, where the identity verification request includes a temporary credential that corresponds to an identity recognition result of a user and that is from a second network device corresponding to a second application, the second application is associated with the first application, the user device performs, by using the second application, an identity recognition operation on the user based on a first identity verification request initiated by the first application, and the second network device returns the temporary credential to the user device based on the identity recognition operation.

Any descriptions about the user device, the first network device, and the second network device in the above-mentioned embodiments are incorporated here by reference. Any descriptions about the identity verification request and the temporary credential in the above-mentioned embodiments are incorporated here by reference.

S204. Generate a second identity verification request about the user based on the temporary credential and identity information of the user, where the second identity verification request includes the temporary credential and the identity information. The identity information of the user is information that is used to indicate an identity of the user and that is obtained from the user device.

In some embodiments, the identity verification request further includes account login information in the first application, and the method further includes the following step: The identity information of the user is obtained based on the account login information.

As an example, the first network device obtains, by using a login status (a cookie sent to the first network device along with the identity verification request) of the current user, the identity information (such as a certificate number or a name) of the user that needs to be verified.

It is worthwhile to note that, because the first application cannot directly parse out the identity information of the user by using the temporary credential returned by the second network device, the first application needs to send the temporary credential to the first network device for write-off.

S206. Send the second identity verification request to the second network device.

In some embodiments, the second identity verification request is used to request to verify the identity of the user based on the temporary credential, and the first network device sends the temporary credential to the second network device together with the identity information of the user that is locally obtained (obtained by a merchant) for verification, to determine a final identity verification result.

S208. Receive an identity comparison result about the user that is returned by the second network device based on the second identity verification request, where the second network device obtains the associated identity recognition result based on the temporary credential, and compares the identity recognition result with the identity information in the second identity verification request to obtain the identity comparison result.

The identity comparison result is a result obtained by comparing the identity information in the second identity verification request with the identity recognition result that is associated with the temporary credential and that is stored in the second network device. It indicates that identity recognition succeeds if it is determined, through comparison, that the identity information is consistent with the identity recognition result, or it indicates that identity recognition fails if it is determined, through comparison, that the identity information is inconsistent with the identity recognition result.

In some embodiments, the method further includes the following step: Verification result information corresponding to the identity verification request is determined based on the identity comparison result, and the verification result information is sent to the user device. In some embodiments, the verification result information is used to indicate that identity verification fails if the identity comparison result indicates that identities are inconsistent; or the verification result information is used to indicate that identity verification succeeds if the identity comparison result indicates that identities are consistent. In some embodiments, the identity comparison result is directly used as the verification result information corresponding to the identity verification request. In some embodiments, the first network device generates the verification result information corresponding to the identity verification request based on the identity comparison result. For example, the identity comparison result is used to indicate that the identity recognition result associated with the temporary credential is inconsistent with the identity information locally obtained by the first network device. In this case, the first network device generates the verification result information based on the identity comparison result, where the verification result information is used to indicate that identity verification fails.

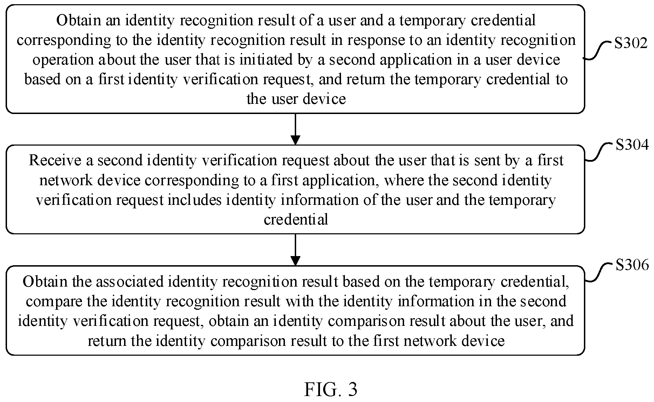

FIG. 3 is a schematic flowchart illustrating a method for three-party identity verification according to one or more embodiments of this specification. The method is applied to a third apparatus provided in one or more subsequent embodiments of this specification or an electronic device in which the third apparatus is configured in. The method in the one or more embodiments is mainly performed by a second network device, and the method specifically includes the following steps:
S302. Obtain an identity recognition result of a user and a temporary credential corresponding to the identity recognition result in response to an identity recognition operation about the user that is initiated by a second application in a user device based on a first identity verification request, and return the temporary credential to the user device, where the first identity verification request is initiated by a first application associated with the second application and sent to the second application, and the user device receives the temporary credential by using the second application and returns the temporary credential to the first application.

Any descriptions about the user device, the first network device, and the second network device in the above-mentioned embodiments are incorporated here by reference. Any descriptions about the first identity verification request and the temporary credential in the above-mentioned embodiments are incorporated here by reference.

In some embodiments, the obtaining an identity recognition result of a user and a temporary credential corresponding to the identity recognition result in response to an identity recognition operation about the user that is initiated by a second application in a user device based on a first identity verification request includes the following steps: The identity recognition result of the user is obtained through recognition in response to the identity recognition operation about the user that is initiated by the second application in the user device based on the first identity verification request; and the temporary credential is randomly generated, and an association relationship between the temporary credential and the identity recognition result is established.

In some embodiments, the temporary credential is a random string token, and is used to mark information of the user whose face is scanned. The second network device establishes the association relationship between the temporary credential and the identity recognition result, to complete, based on the association relationship, verification on identity information in a second identity verification request sent by a first network device, to complete three-party identity verification.

In some embodiments, the second application sends information obtained based on the identity recognition operation to the second network device together with a session ID. After generating the temporary credential, the second network device establishes an association relationship between the temporary credential, the session ID, and the identity recognition result.

S304. Receive the second identity verification request about the user that is sent by the first network device corresponding to the first application, where the second identity verification request includes the identity information of the user and the temporary credential.

Any descriptions about the second identity verification request in the above-mentioned embodiments are incorporated here by reference.

S306. Obtain the associated identity recognition result based on the temporary credential, compare the identity recognition result with the identity information in the second identity verification request, obtain an identity comparison result about the user, and return the identity comparison result to the first network device.

As an example, the second network device queries the identity recognition result associated with the temporary credential based on the temporary credential extracted from the second identity verification request and based on the established association relationship, then compares the identity recognition result with the temporary credential extracted from the second identity verification request, to obtain the identity comparison result of the user, and returns the identity comparison result to the first network device.

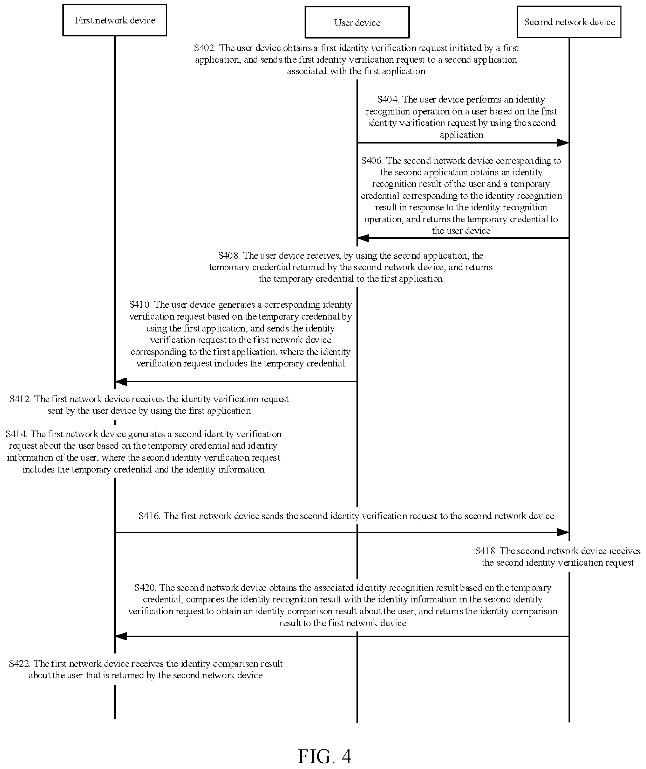

FIG. 4 is a schematic flowchart illustrating a method for three-party identity verification according to one or more embodiments of this specification. The method is mainly performed by a user device, a first network device, and a second network device, and specifically includes the following steps:
S402. The user device obtains a first identity verification request initiated by a first application, and sends the first identity verification request to a second application associated with the first application.
S404. The user device performs an identity recognition operation on a user based on the first identity verification request by using the second application.
S406. The second network device corresponding to the second application obtains an identity recognition result of the user and a temporary credential corresponding to the identity recognition result in response to the identity recognition operation, and returns the temporary credential to the user device.
S408. The user device receives, by using the second application, the temporary credential returned by the second network device, and returns the temporary credential to the first application.
S410. The user device generates a corresponding identity verification request based on the temporary credential by using the first application, and sends the identity verification request to the first network device corresponding to the first application, where the identity verification request includes the temporary credential.
S412. The first network device receives the identity verification request sent by the user device by using the first application.
S414. The first network device generates a second identity verification request about the user based on the temporary credential and identity information of the user, where the second identity verification request includes the temporary credential and the identity information.
S416. The first network device sends the second identity verification request to the second network device.
S418. The second network device receives the second identity verification request.
S420. The second network device obtains the associated identity recognition result based on the temporary credential, compares the identity recognition result with the identity information in the second identity verification request to obtain an identity comparison result about the user, and returns the identity comparison result to the first network device.
S422. The first network device receives the identity comparison result about the user that is returned by the second network device.

Implementations of the related operations in the one or more embodiments are the same as or similar to the implementations of the corresponding operations in the above-mentioned embodiments. Details are omitted here for simplicity.

In some embodiments, at least one of the above-mentioned steps is implemented based on the OAuth2.0 protocol. OAuth2.0 has succeed in full security demonstration, and is an industry-approved authorization protocol standard.

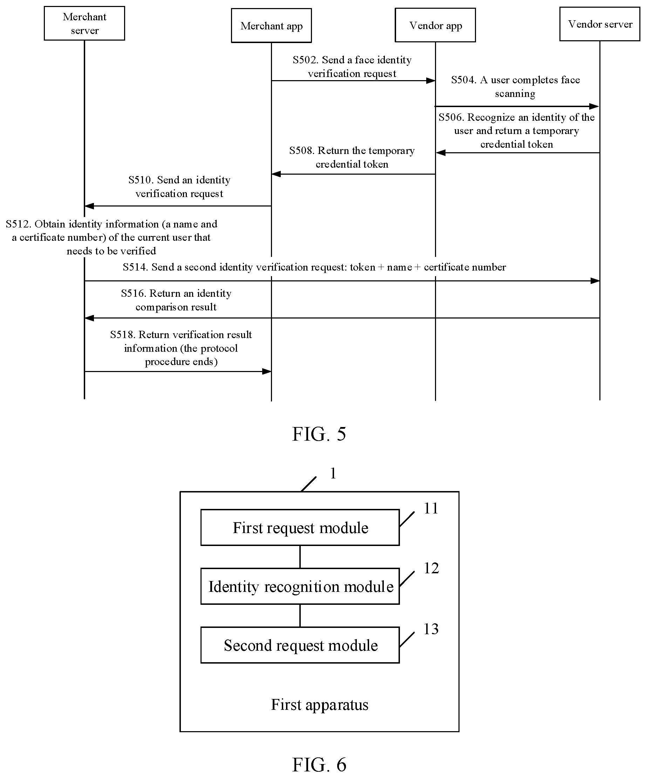

FIG. 5 is a schematic flowchart illustrating an example of a method for three-party identity verification according to one or more embodiments of this specification. In the method, face identity verification is used as an example, and the method is mainly implemented by a merchant server, a merchant app, a vendor app, and a vendor server. A specific procedure includes the following steps: S502. The merchant app initiates a face identity verification request (a first identity verification request). S504. The vendor app guides a user to complete face scanning. S506. The vendor server recognizes an identity of the user and returns a temporary credential token. S508. The vendor app returns the temporary credential token to the merchant app. S510. The merchant app sends an identity verification request to the merchant server. S512. The merchant APP obtains identity information (a name and a certificate number) of the current user that needs to be verified. S514. The merchant server sends a second identity verification request to the vendor server: token + name + certificate number. S516. The vendor server returns an identity comparison result. S518. The merchant server returns verification result information to the merchant app (the protocol procedure ends).

According to the method for three-party identity verification in embodiments of this specification, after obtaining a first identity verification request initiated by a first application and sending the first identity verification request to an associated second application, and performing an identity recognition operation on a user by using the second application, the user device can interact with the second network device corresponding to the second application to obtain a temporary credential, and then interact with the first network device corresponding to the first application based on the temporary credential, so that the first network device interacts with the second network device based on the temporary credential and identity information of the user to complete user identity verification, in other words, complete three-party identity verification. It can reduce the overall interaction frequency, and simplify the interaction flow. In addition, because the temporary credential has no real significance, the first network device must interact with the second network device to complete user identity verification, thus providing a certain level of fault tolerance in the overall process.

It is worthwhile to note that, according to the method for three-party identity verification provided in embodiments of this specification, access and understanding costs of a merchant are optimized. Interactions between a vendor and the merchant are reduced from three interactions to two interactions, so that interaction efficiency is improved. In addition, because a temporary credential has no actual meaning, the merchant can achieve a service purpose of the merchant only by using correct procedure steps, so that the solution has a certain level of security fault tolerance. Furthermore, because an interaction mode between a merchant app and a vendor app does not need to be changed, costs of upgrading and transforming inventory service are relatively low.

FIG. 6 illustrates an apparatus for three-party identity verification (hereinafter referred to as a "first apparatus") in a user device according to one or more embodiments of this specification. As shown in FIG. 6, first apparatus 1 includes first request module 11, identity recognition module 12, and second request module 13.

First request module 11 is configured to obtain a first identity verification request initiated by a first application, and send the first identity verification request to a second application associated with the first application.

Identity recognition module 12 is configured to perform an identity recognition operation on a user based on the first identity verification request by using the second application, obtain a temporary credential that corresponds to an identity recognition result of the user and that is returned by a second network device corresponding to the second application based on the identity recognition operation, and return the temporary credential to the first application.

Second request module 13 is configured to generate a corresponding identity verification request based on the temporary credential by using the first application, and send the identity verification request to a first network device corresponding to the first application, so that the first network device performs user identity verification with the second network device based on the identity verification request, where the identity verification request includes the temporary credential.

In some embodiments, first apparatus 1 is further configured to receive verification result information about the user that is returned by the first network device based on the identity verification request.

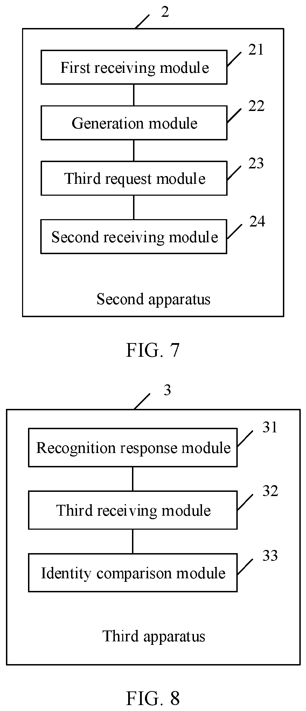

FIG. 7 illustrates an apparatus for three-party identity verification (hereinafter referred to as a "second apparatus" for short) in a first network device according to one or more embodiments of this specification. As shown in FIG. 7, second apparatus 2 includes first receiving module 21, generation module 22, third request module 23, and second receiving module 24.

First receiving module 21 is configured to receive an identity verification request sent by a user device by using a first application, where the identity verification request includes a temporary credential that corresponds to an identity recognition result of a user and that is from a second network device corresponding to a second application, the second application is associated with the first application, the user device performs, by using the second application, an identity recognition operation on the user based on a first identity verification request initiated by the first application, and the second network device returns the temporary credential to the user device based on the identity recognition operation.

Generation module 22 is configured to generate a second identity verification request about the user based on the temporary credential and identity information of the user, where the second identity verification request includes the temporary credential and the identity information.

Third request module 23 is configured to send the second identity verification request to the second network device.

Second receiving module 24 is configured to receive an identity comparison result about the user that is returned by the second network device based on the second identity verification request, where the second network device obtains the associated identity recognition result based on the temporary credential, and compares the identity recognition result with the identity information in the second identity verification request to obtain the identity comparison result.

In some embodiments, the identity verification request further includes account login information in the first application, and second apparatus 2 is further configured to obtain the identity information of the user based on the account login information.

In some embodiments, second apparatus 2 is further configured to determine verification result information corresponding to the identity verification request based on the identity comparison result, and send the verification result information to the user device.

FIG. 8 is an apparatus for three-party identity verification (hereinafter referred to as a "third apparatus" for short) in a second network device according to one or more embodiments of this specification. As shown in FIG. 8, third apparatus 3 includes recognition response module 31, third receiving module 32, and identity comparison module 33.

Recognition response module 31 is configured to obtain an identity recognition result of a user and a temporary credential corresponding to the identity recognition result in response to an identity recognition operation about the user that is initiated by a second application in a user device based on a first identity verification request, and return the temporary credential to the user device, where the first identity verification request is initiated by a first application associated with the second application and sent to the second application, and the user device receives the temporary credential by using the second application and returns the temporary credential to the first application.

Third receiving module 32 is configured to receive a second identity verification request about the user that is sent by a first network device corresponding to the first application, where the second identity verification request includes identity information of the user and the temporary credential.

Identity comparison module 33 is configured to obtain the associated identity recognition result based on the temporary credential, compare the identity recognition result with the identity information in the second identity verification request, obtain an identity comparison result about the user, and return the identity comparison result to the first network device.

In some embodiments, the obtaining an identity recognition result of a user and a temporary credential corresponding to the identity recognition result in response to an identity recognition operation about the user that is initiated by a second application in a user device based on a first identity verification request includes the following steps: The identity recognition result of the user is obtained through recognition in response to the identity recognition operation about the user that is initiated by the second application in the user device based on the first identity verification request; and the temporary credential is randomly generated, and an association relationship between the temporary credential and the identity recognition result is established.

The above-mentioned apparatus embodiments correspond to the method embodiments. For detailed descriptions, references can be made to the descriptions in the method embodiments. Implementations of operations performed by the apparatus and modules of the apparatus are the same as or similar to the implementations of the corresponding operations in the above-mentioned method embodiments. Details are omitted here for simplicity. The apparatus embodiments are obtained based on the corresponding method embodiments, and have same technical effects as the corresponding method embodiments. For detailed descriptions, references can be made to the corresponding method embodiments.

One or more embodiments of this specification further provide a computer storage medium. The computer storage medium can store instructions. The instructions are adapted to being loaded by a processor to perform the methods in the embodiments shown in FIG. 1 to FIG. 5. For specific execution processes, references can be made to the detailed descriptions of the embodiments shown in FIG. 1 to FIG. 5. Details are omitted here for simplicity.

This specification further provides a computer program product. The computer program product stores at least one instruction. The at least one instruction is adapted to being loaded by a processor to perform the methods in the embodiments shown in FIG. 1 to FIG. 5. For specific execution processes, references can be made to the detailed descriptions of the embodiments shown in FIG. 1 to FIG. 5. Details are omitted here for simplicity.

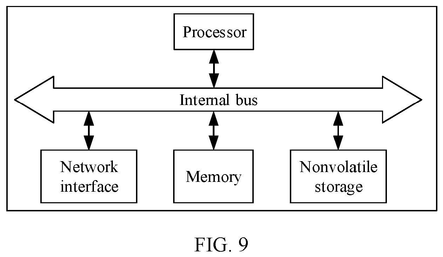

One or more embodiments of this specification further provide a schematic diagram illustrating a structure of an electronic device shown in FIG. 9. As shown in FIG. 9, in terms of hardware, the electronic device includes a processor, an internal bus, a network interface, a memory, and a nonvolatile storage, and certainly may further include hardware needed by another service. The processor reads a corresponding computer program from the nonvolatile storage to the memory and then runs the computer program, to implement the above-mentioned voice activity detection method.

Certainly, in addition to a software implementation, this specification does not rule out another implementation, such as a logic device or a combination of software and hardware. To be specific, an execution body of the following processing procedure is not limited to logical units, and may alternatively be hardware or a logical device.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure to a hardware circuit to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer independently performs programming to "integrate" a digital system onto a PLD, without requesting a chip manufacturer to design and manufacture a dedicated integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-HighSpeed Integrated Circuit Hardware Description Language (VHDL) and Verilog are most commonly used. A person skilled in the art should also be clear that a hardware circuit that implements a logical method procedure can be readily obtained once the method procedure is logically programmed by using several of the above-mentioned hardware description languages and is programmed to an integrated circuit.

A controller can be implemented in any appropriate way. For example, the controller can be in a form of a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or a built-in microcontroller. Examples of the controller include but are not limited to the following microcontrollers: ARC 625D, Atmel AT91SAM, Microchip PIC18F26K20, and Silicone Labs C8051F320. A storage controller can be further implemented as a part of control logic of a storage. A person skilled in the art also knows that in addition to implementing the controller by using only the computer-readable program code, logic programming can be performed on method steps to enable the controller to implement the same function in a form of a logic gate, a switch, an application-specific integrated circuit, a programmable logic controller, an embedded microcontroller, etc. Therefore, the controller can be considered as a hardware component, and an apparatus configured to implement various functions in the controller can also be considered as a structure in the hardware component. Alternatively, the apparatus configured to implement various functions can even be considered as both a software module implementing a method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, when the above-mentioned apparatus is described, the apparatus is divided into various units based on functions for separate descriptions. Certainly, during implementation of this specification, functions of units can be implemented in the same software and/or hardware or more pieces of software and/or hardware.

A person skilled in the art should understand that embodiments of this specification can be provided as methods, systems, or computer program products. Therefore, this specification can use a form of hardware only embodiments, software only embodiments, or embodiments with a combination of software and hardware. In addition, this specification can be in a form of a computer program product implemented on one or more computer-usable storage media (including but not limited to a magnetic disk storage, a CD-ROM, an optical storage, etc.) including computer-usable program code.

This specification is described with reference to the flowcharts and/or block diagrams of the method, the device (system), and the computer program product according to embodiments of this specification. It is worthwhile to understand that each procedure and/or each block in the flowcharts and/or the block diagrams and a combination of procedures and/or a combination of blocks in the flowcharts and/or block diagrams can be implemented by using computer program instructions. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

Alternatively, these computer program instructions can be stored in a computer-readable storage that can instruct the computer or the another programmable data processing device to work in a specific way, so that the instructions stored in the computer-readable storage generate an artifact that includes an instruction apparatus. The instruction apparatus implements a specified function in one or more procedures in the flowcharts and/or in one or more blocks in the block diagrams.

Alternatively, these computer program instructions can be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

In a typical configuration, a computing device includes one or more processors (CPUs), an input/output interface, a network interface, and a memory.

The memory may include a volatile storage, a random access memory (RAM), a nonvolatile memory, and/or other forms in computer-readable media, such as a read-only memory (ROM) or a flash memory (flash RAM). The memory is an example of the computer-readable medium.

The computer-readable medium includes persistent, non-persistent, movable, and unmovable media that can store information by using any method or technology. The information can be a computer-readable instruction, a data structure, a program module, or other data. Examples of the computer storage medium include but are not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage or another magnetic storage device, or any other non-transmission medium. The computer storage medium can be configured to store information accessible to a computing device. As described in this specification, the computer-readable medium does not include computer-readable transitory media such as a modulated data signal and a carrier.

It is further worthwhile to note that the term "comprise" or "include" or any other variation thereof is intended to cover a non-exclusive inclusion, so that a process, method, product, or device that includes a series of elements includes those elements and further includes other elements not expressly listed or inherent to such a process, method, product, or device. Without more constraints, an element preceded by "includes a ... " does not preclude the presence of additional identical elements in a process, method, product, or device that includes the element.

A person skilled in the art should understand that embodiments of this specification can be provided as methods, systems, or computer program products. Therefore, this specification can use a form of hardware only embodiments, software only embodiments, or embodiments with a combination of software and hardware. In addition, this specification can be in a form of a computer program product implemented on one or more computer-usable storage media (including but not limited to a magnetic disk storage, a CD-ROM, an optical storage, etc.) including computer-usable program code.

This specification can be described in the general context of computer-executable instructions executed by a computer, for example, a program module. Generally, the program module includes a routine, a program, an object, a component, a data structure, etc. executing a specific task or implementing a specific abstract data type. This specification can alternatively be practiced in a distributed computing environment in which tasks are performed by remote processing devices connected via a communication network. In a distributed computing environment, the program module can be located in both local and remote computer storage media including storage devices.

Embodiments of this specification are described in a progressive way. For same or similar parts in embodiments, references can be made to each other. Each embodiment focuses on a difference from another embodiment. Especially, a system embodiment is basically similar to a method embodiment, and therefore is described briefly. For a related part, references can be made to some descriptions in the method embodiment.

The above descriptions are merely embodiments of this specification, and are not intended to limit this specification. A person skilled in the art can make various modifications and changes to this specification. Any modification, equivalent replacement, improvement, etc. made without departing from the spirit and principle of this specification shall fall within the scope of the claims of this specification.

### EXAMPLES

1. A method for three-party identity verification, applied to a user device, wherein the method comprises:
   obtaining a first identity verification request initiated by a first application, and sending the first identity verification request to a second application associated with the first application;
   performing an identity recognition operation on a user based on the first identity verification request by using the second application, obtaining a temporary credential that corresponds to an identity recognition result of the user and that is returned by a second network device corresponding to the second application based on the identity recognition operation, and returning the temporary credential to the first application; and
   generating a corresponding identity verification request based on the temporary credential by using the first application, and sending the identity verification request to a first network device corresponding to the first application, so that the first network device performs user identity verification with the second network device based on the identity verification request, wherein the identity verification request comprises the temporary credential.
2. The method according to example 1, wherein the identity verification request further comprises account login information in the first application, so that the first network device obtains identity information of the user based on the account login information.
3. The method according to example 2, wherein the temporary credential is randomly generated by the second network device, and the second network device has established an association relationship between the temporary credential and the identity recognition result of the user.
4. The method according to example 1, further comprising:
   receiving verification result information about the user that is returned by the first network device based on the identity verification request.
5. A method for three-party identity verification, applied to a first network device, wherein the method comprises:
   receiving an identity verification request sent by a user device by using a first application, wherein the identity verification request comprises a temporary credential that corresponds to an identity recognition result of a user and that is from a second network device corresponding to a second application, the second application is associated with the first application, the user device performs, by using the second application, an identity recognition operation on the user based on a first identity verification request initiated by the first application, and the second network device returns the temporary credential to the user device based on the identity recognition operation;
   generating a second identity verification request about the user based on the temporary credential and identity information of the user, wherein the second identity verification request comprises the temporary credential and the identity information;
   sending the second identity verification request to the second network device; and
   receiving an identity comparison result about the user that is returned by the second network device based on the second identity verification request, wherein the second network device obtains the associated identity recognition result based on the temporary credential, and compares the identity recognition result with the identity information in the second identity verification request to obtain the identity comparison result.
6. The method according to example 5, wherein the identity verification request further comprises account login information in the first application, and the method further comprises:
   obtaining the identity information of the user based on the account login information.
7. The method according to example 6, further comprising:
   determining verification result information corresponding to the identity verification request based on the identity comparison result, and sending the verification result information to the user device.
8. The method according to example 7, wherein the verification result information is used to indicate that identity verification fails if the identity comparison result indicates that identities are inconsistent; or the verification result information is used to indicate that identity verification succeeds if the identity comparison result indicates that identities are consistent.
9. A method for three-party identity verification, applied to a second network device, wherein the method comprises:
   obtaining an identity recognition result of a user and a temporary credential corresponding to the identity recognition result in response to an identity recognition operation about the user that is initiated by a second application in a user device based on a first identity verification request, and returning the temporary credential to the user device, wherein the first identity verification request is initiated by a first application associated with the second application and sent to the second application, and the user device receives the temporary credential by using the second application and returns the temporary credential to the first application;
   receiving a second identity verification request about the user that is sent by a first network device corresponding to the first application, wherein the second identity verification request comprises identity information of the user and the temporary credential; and
   obtaining the associated identity recognition result based on the temporary credential, comparing the identity recognition result with the identity information in the second identity verification request, obtaining an identity comparison result about the user, and returning the identity comparison result to the first network device.
10. The method according to example 9, wherein the obtaining an identity recognition result of a user and a temporary credential corresponding to the identity recognition result in response to an identity recognition operation about the user that is initiated by a second application in a user device based on a first identity verification request comprises:
   obtaining the identity recognition result of the user through recognition in response to the identity recognition operation about the user that is initiated by the second application in the user device based on the first identity verification request; and
   randomly generating the temporary credential, and establishing an association relationship between the temporary credential and the identity recognition result.
11. An implementation of a three-party identity verification protocol, comprising:
   obtaining, by a user device, a first identity verification request initiated by a first application, and sending the first identity verification request to a second application associated with the first application;
   performing, by the user device, an identity recognition operation on a user based on the first identity verification request by using the second application;
   obtaining, by a second network device corresponding to the second application, an identity recognition result of the user and a temporary credential corresponding to the identity recognition result in response to the identity recognition operation, and returning the temporary credential to the user device;
   receiving, by the user device by using the second application, the temporary credential returned by the second network device, and returning the temporary credential to the first application;
   generating, by the user device, a corresponding identity verification request based on the temporary credential by using the first application, and sending the identity verification request to a first network device corresponding to the first application, wherein the identity verification request comprises the temporary credential;
   receiving, by the first network device, the identity verification request sent by the user device by using the first application;
   generating, by the first network device, a second identity verification request about the user based on the temporary credential and identity information of the user, wherein the second identity verification request comprises the temporary credential and the identity information;
   sending, by the first network device, the second identity verification request to the second network device;
   receiving, by the second network device, the second identity verification request;
   obtaining, by the second network device, the associated identity recognition result based on the temporary credential, comparing the identity recognition result with the identity information in the second identity verification request to obtain an identity comparison result about the user, and returning the identity comparison result to the first network device; and
   receiving, by the first network device, the identity comparison result about the user that is returned by the second network device.
12. An apparatus for three-party identity verification in a user device, comprising:
   a first request module, configured to obtain a first identity verification request initiated by a first application, and send the first identity verification request to a second application associated with the first application;
   an identity recognition module, configured to perform an identity recognition operation on a user based on the first identity verification request by using the second application, obtain a temporary credential that corresponds to an identity recognition result of the user and that is returned by a second network device corresponding to the second application based on the identity recognition operation, and return the temporary credential to the first application; and
   a second request module, configured to generate a corresponding identity verification request based on the temporary credential by using the first application, and send the identity verification request to a first network device corresponding to the first application, so that the first network device performs user identity verification with the second network device based on the identity verification request, wherein the identity verification request comprises the temporary credential.
13. An apparatus for three-party identity verification in a first network device, comprising:
   a first receiving module, configured to receive an identity verification request sent by a user device by using a first application, wherein the identity verification request comprises a temporary credential that corresponds to an identity recognition result of a user and that is from a second network device corresponding to a second application, the second application is associated with the first application, the user device performs, by using the second application, an identity recognition operation on the user based on a first identity verification request initiated by the first application, and the second network device returns the temporary credential to the user device based on the identity recognition operation;
   a generation module, configured to generate a second identity verification request about the user based on the temporary credential and identity information of the user, wherein the second identity verification request comprises the temporary credential and the identity information;
   a third request module, configured to send the second identity verification request to the second network device; and
   a second receiving module, configured to receive an identity comparison result about the user that is returned by the second network device based on the second identity verification request, wherein the second network device obtains the associated identity recognition result based on the temporary credential, and compares the identity recognition result with the identity information in the second identity verification request to obtain the identity comparison result.
14. An apparatus for three-party identity verification in a second network device, comprising:
   a recognition response module, configured to obtain an identity recognition result of a user and a temporary credential corresponding to the identity recognition result in response to an identity recognition operation about the user that is initiated by a second application in a user device based on a first identity verification request, and return the temporary credential to the user device, wherein the first identity verification request is initiated by a first application associated with the second application and sent to the second application, and the user device receives the temporary credential by using the second application and returns the temporary credential to the first application;
   a third receiving module, configured to receive a second identity verification request about the user that is sent by a first network device, wherein the second identity verification request comprises identity information of the user and the temporary credential; and
   an identity comparison module, configured to obtain the associated identity recognition result based on the temporary credential, compare the identity recognition result with the identity information in the second identity verification request, obtain an identity comparison result about the user, and return the identity comparison result to the first network device.
15. A storage medium, storing a computer program, wherein the steps of the method according to any one of examples 1 to 11 are implemented when the computer program is executed by a processor.
16. An electronic device, comprising a processor and a storage, wherein the storage stores a computer program, and the computer program is adapted to being loaded by the processor to perform the steps of the method according to any one of examples 1 to 11.
17. A computer program product, storing at least one instruction, wherein the steps of the method according to any one of examples 1 to 11 are implemented when the at least one instruction is executed by a processor.

## Claims

1. A method for three-party identity verification, applied to a user device, wherein the method comprises:
obtaining a first identity verification request initiated by a first application, and sending the first identity verification request to a second application associated with the first application;
performing an identity recognition operation on a user based on the first identity verification request by using the second application, obtaining a temporary credential that corresponds to an identity recognition result of the user and that is returned by a second network device corresponding to the second application based on the identity recognition operation, and returning the temporary credential to the first application; and
generating a corresponding identity verification request based on the temporary credential by using the first application, and sending the identity verification request to a first network device corresponding to the first application, so that the first network device performs user identity verification with the second network device based on the identity verification request, wherein the identity verification request comprises the temporary credential.

2. The method according to claim 1, wherein the identity verification request further comprises account login information in the first application, so that the first network device obtains identity information of the user based on the account login information; optionally
wherein the temporary credential is randomly generated by the second network device, and the second network device has established an association relationship between the temporary credential and the identity recognition result of the user.

3. The method according to claim 1, further comprising:
receiving verification result information about the user that is returned by the first network device based on the identity verification request.

4. A method for three-party identity verification, applied to a first network device, wherein the method comprises:
receiving an identity verification request sent by a user device by using a first application, wherein the identity verification request comprises a temporary credential that corresponds to an identity recognition result of a user and that is from a second network device corresponding to a second application, the second application is associated with the first application, the user device performs, by using the second application, an identity recognition operation on the user based on a first identity verification request initiated by the first application, and the second network device returns the temporary credential to the user device based on the identity recognition operation;
generating a second identity verification request about the user based on the temporary credential and identity information of the user, wherein the second identity verification request comprises the temporary credential and the identity information;
sending the second identity verification request to the second network device; and
receiving an identity comparison result about the user that is returned by the second network device based on the second identity verification request, wherein the second network device obtains the associated identity recognition result based on the temporary credential, and compares the identity recognition result with the identity information in the second identity verification request to obtain the identity comparison result.

5. The method according to claim 4, wherein the identity verification request further comprises account login information in the first application, and the method further comprises:
obtaining the identity information of the user based on the account login information.

6. The method according to claim 5, further comprising:
determining verification result information corresponding to the identity verification request based on the identity comparison result, and sending the verification result information to the user device; optionally
wherein the verification result information is used to indicate that identity verification fails if the identity comparison result indicates that identities are inconsistent; or the verification result information is used to indicate that identity verification succeeds if the identity comparison result indicates that identities are consistent.

7. A method for three-party identity verification, applied to a second network device, wherein the method comprises:
obtaining an identity recognition result of a user and a temporary credential corresponding to the identity recognition result in response to an identity recognition operation about the user that is initiated by a second application in a user device based on a first identity verification request, and returning the temporary credential to the user device, wherein the first identity verification request is initiated by a first application associated with the second application and sent to the second application, and the user device receives the temporary credential by using the second application and returns the temporary credential to the first application;
receiving a second identity verification request about the user that is sent by a first network device corresponding to the first application, wherein the second identity verification request comprises identity information of the user and the temporary credential; and
obtaining the associated identity recognition result based on the temporary credential, comparing the identity recognition result with the identity information in the second identity verification request, obtaining an identity comparison result about the user, and returning the identity comparison result to the first network device.

8. The method according to claim 7, wherein the obtaining an identity recognition result of a user and a temporary credential corresponding to the identity recognition result in response to an identity recognition operation about the user that is initiated by a second application in a user device based on a first identity verification request comprises:
obtaining the identity recognition result of the user through recognition in response to the identity recognition operation about the user that is initiated by the second application in the user device based on the first identity verification request; and
randomly generating the temporary credential, and establishing an association relationship between the temporary credential and the identity recognition result.

9. An implementation of a three-party identity verification protocol, comprising:
obtaining, by a user device, a first identity verification request initiated by a first application, and sending the first identity verification request to a second application associated with the first application;
performing, by the user device, an identity recognition operation on a user based on the first identity verification request by using the second application;
obtaining, by a second network device corresponding to the second application, an identity recognition result of the user and a temporary credential corresponding to the identity recognition result in response to the identity recognition operation, and returning the temporary credential to the user device;
receiving, by the user device by using the second application, the temporary credential returned by the second network device, and returning the temporary credential to the first application;
generating, by the user device, a corresponding identity verification request based on the temporary credential by using the first application, and sending the identity verification request to a first network device corresponding to the first application, wherein the identity verification request comprises the temporary credential;
receiving, by the first network device, the identity verification request sent by the user device by using the first application;
generating, by the first network device, a second identity verification request about the user based on the temporary credential and identity information of the user, wherein the second identity verification request comprises the temporary credential and the identity information;
sending, by the first network device, the second identity verification request to the second network device;
receiving, by the second network device, the second identity verification request;
obtaining, by the second network device, the associated identity recognition result based on the temporary credential, comparing the identity recognition result with the identity information in the second identity verification request to obtain an identity comparison result about the user, and returning the identity comparison result to the first network device; and
receiving, by the first network device, the identity comparison result about the user that is returned by the second network device.

10. An apparatus for three-party identity verification in a user device, comprising:
a first request module, configured to obtain a first identity verification request initiated by a first application, and send the first identity verification request to a second application associated with the first application;
an identity recognition module, configured to perform an identity recognition operation on a user based on the first identity verification request by using the second application, obtain a temporary credential that corresponds to an identity recognition result of the user and that is returned by a second network device corresponding to the second application based on the identity recognition operation, and return the temporary credential to the first application; and
a second request module, configured to generate a corresponding identity verification request based on the temporary credential by using the first application, and send the identity verification request to a first network device corresponding to the first application, so that the first network device performs user identity verification with the second network device based on the identity verification request, wherein the identity verification request comprises the temporary credential.

11. An apparatus for three-party identity verification in a first network device, comprising:
a first receiving module, configured to receive an identity verification request sent by a user device by using a first application, wherein the identity verification request comprises a temporary credential that corresponds to an identity recognition result of a user and that is from a second network device corresponding to a second application, the second application is associated with the first application, the user device performs, by using the second application, an identity recognition operation on the user based on a first identity verification request initiated by the first application, and the second network device returns the temporary credential to the user device based on the identity recognition operation;
a generation module, configured to generate a second identity verification request about the user based on the temporary credential and identity information of the user, wherein the second identity verification request comprises the temporary credential and the identity information;
a third request module, configured to send the second identity verification request to the second network device; and
a second receiving module, configured to receive an identity comparison result about the user that is returned by the second network device based on the second identity verification request, wherein the second network device obtains the associated identity recognition result based on the temporary credential, and compares the identity recognition result with the identity information in the second identity verification request to obtain the identity comparison result.

12. An apparatus for three-party identity verification in a second network device, comprising:
a recognition response module, configured to obtain an identity recognition result of a user and a temporary credential corresponding to the identity recognition result in response to an identity recognition operation about the user that is initiated by a second application in a user device based on a first identity verification request, and return the temporary credential to the user device, wherein the first identity verification request is initiated by a first application associated with the second application and sent to the second application, and the user device receives the temporary credential by using the second application and returns the temporary credential to the first application;
a third receiving module, configured to receive a second identity verification request about the user that is sent by a first network device, wherein the second identity verification request comprises identity information of the user and the temporary credential; and
an identity comparison module, configured to obtain the associated identity recognition result based on the temporary credential, compare the identity recognition result with the identity information in the second identity verification request, obtain an identity comparison result about the user, and return the identity comparison result to the first network device.

13. A storage medium, storing a computer program, wherein the steps of the method according to any one of claims 1 to 9 are implemented when the computer program is executed by a processor.

14. An electronic device, comprising a processor and a storage, wherein the storage stores a computer program, and the computer program is adapted to being loaded by the processor to perform the steps of the method according to any one of claims 1 to 9.

15. A computer program product, storing at least one instruction, wherein the steps of the method according to any one of claims 1 to 9 are implemented when the at least one instruction is executed by a processor.
